Europäisches Patentamt

European Patent Office

Office européen des brevets

(11) Veröffentlichungsnummer: **0 167 000**

**B1**

(12) # EUROPÄISCHE PATENTSCHRIFT

(45) Veröffentlichungstag der Patentschrift:
18.05.88

(21) Anmeldenummer: 85106942.7

(22) Anmeldetag: 04.06.85

(51) Int. Cl.⁴: **H 01 B 3/00,** C 08 F 10/00,
C 08 F 2/44

(54) **Gut wärmeleitende, elektrisch isolierende Thermoplaste.**

(30) Priorität: 06.06.84 DE 3421105

(43) Veröffentlichungstag der Anmeldung:
08.01.86 Patentblatt 86/2

(45) Bekanntmachung des Hinweises auf die Patenterteilung:
18.05.88 Patentblatt 88/20

(84) Benannte Vertragsstaaten:
AT BE CH DE FR GB IT LI LU NL SE

(56) Entgegenhaltungen:
DE-A-2 256 695
FR-A-1 245 726
GB-A-1 002 525
US-A-3 300 329

(73) Patentinhaber: **Siemens Aktiengesellschaft Berlin
und München, Wittelsbacherplatz 2, D-8000
München 2 (DE)**

(72) Erfinder: **Reichert, Karl- Heinz, Prof. Dr. rer. nat.,
Olwenstrasse 39 b, D-1000 Berlin 28 (DE)**
Erfinder: **Schöppel, Wolfgang, Dipl.- Chem.,
Heinrich- Lönnies- Strasse 28, D-2000 Norderstedt
(DE)**
Erfinder: **Ewangelidis, Stawros, Dipl.- Chem.,
Dieselstrasse 17, D-1000 Berlin 44 (DE)**
Erfinder: **Bednarz, Jürgen, Dr.- Ing., Enzianstrasse
7, D-8122 Penzberg (DE)**
Erfinder: **Leute, Ulrich, Herzogplatz 17, D-8011
Zorneding (DE)**

## Beschreibung

Die Erfindung betrifft gut wärmeleitende, elektrisch isolierende Kunststoffe, insbesondere Thermoplaste, auf der Basis von mit vernetztem Polymer eingehüllten Metallteilchen.

Bei elektronischen und elektrischen Bauteilen und Geräten treten aufgrund zunehmender Integration und Packungsdichte Probleme mit der Wärmeabfuhr durch Kunststoffumhüllungen auf. Man findet sie beim einzelnen IC, wo die Verlustwärme des Chips durch die Umkapselung abfließen muß, bei umhüllten Hybridschaltungen und bei Gehäusen thermisch hochbelasteter Geräte, um einige wenige Beispiele zu nennen. Erwünscht ist stets ein gut wärmeleitender elektrisch isolierender Kunststoff. Dieser wird auch in anderen Gebieten der Elektrotechnik, zum Beispiel bei Kleinmotoren, gefordert.

Die Wärmeleitfähigkeit ungefüllter, nicht geschäumter Kunststoffe liegt zwischen etwa 0,2 und 0,5 Wm $^{-1}$K$^{-1}$. Bei duroplastischen Preß- oder Vergußmassen werden durch Zugabe von ca. 70 % Quarz Werte bis etwa 2 Wm$^{-1}$K$^{-1}$ erreicht. Thermoplaste mit derartigen Füllgraden an elektrisch nicht leitenden, aber gut wärmeleitenden und damit in der Regel sehr harten Füllstoffen werden kaum eingesetzt, da erhebliche Verarbeitungsprobleme (Abrasion) auftreten.

Verzichtet man allerdings auf die elektrische Isolation, so sind Thermoplaste erhältlich, die infolge ihrer Füllung mit Aluminiumplättchen eine stark anisotrope Wärmeleitfähigkeit von 2 Wm$^{-1}$K$^{-1}$ und etwas mehr aufweisen.

Es ist bekannt, daß Ethylen in Gegenwart von Eisenpulver so polymerisiert werden kann, daß die einzelnen Eisenpartikel mit einer Polymerschicht umhüllt sind (Messe-Information Hannover 83, Institut für Technische Chemie der Technischen Universität Berlin: Blasensäule als Polymerisations-Reaktor, Polymer/Metall-Werkstoffe). Dieses Produkt zeigt zwar einen deutlich höheren spezifischen elektrischen Durchgangswiderstand als ein physikalisches Gemisch von Polyethylen und gleichem Volumenanteil Eisen. Dieser Widerstand ist aber bei Eisenanteilen, die zu den gewünschten Werten der Wärmeleitfähigkeit führen, für eine Anwendung als elektrische Isolation zu klein.

Es ist auch gemäß US-A-3 300 329 ein Kunststoff auf Basis von mit Polyethylen umhüllten Aluminiumteilchen bekannt, wobei die Umhüllung durch Polymerisieren von Ethylen mittels Ziegler-Katalysatoren in Gegenwart von Aluminiumpulver gebildet wird.

Der Erfindung liegt die Aufgabe zugrunde, einen gut wärmeleitenden Kunststoff, insbesondere ein Thermoplast zu erzeugen, der auch die erforderlichen elektrischen Isolationswerte aufweist. Außerdem soll dieser Kunststoff wärmebeständig und nicht brennbar sein.

Diese Aufgabe wird durch den Kunststoff gemäß Anspruch 1 gelöst.

Es ist bekannt, daß Aluminium an der Luft eine dünne, passivierende Al$_2$O$_3$-Schicht ausbildet. Um das zu verhindern, werden Aluminiumoberflächen von vielen Herstellern mit sehr dünnen organischen Schutzschichten oder mit Legierungsbestandteilen versehen. Diese können mit Teilen des Katalysatorsystems eine Vielzahl von unerwünschten Reaktionen, beziehungsweise eine Desaktivierung des Katalysators bewirken. Es war daher überraschend, daß im Gegensatz zu weitgehend oxidfreien Aluminium-Flakes (Typ K 102 HE, Omya GmbH), die Polymerisation mit oberflächenoxidiertem Aluminiumpulver (Typ Ecka AS 081, Eckart-Werke) zu Produkten mit außerordentlich guten thermischen und elektrischen Eigenschaften führte.

Die Verwendung von runden und relativ weichen Aluminiumpulverteilchen verbessert auch schon die elektrische Isolation. Um diesen Effekt aber weiter zu steigern, werden nach der Lehre der Erfindung die auf der Oberfläche der Metallpulverpartikel aufgewachsenen Polyolefine zumindest in der Nähe des Metallpartikels vernetzt. Die so erzeugten Kunststoffe weisen eine relativ geringe Dichte auf, was bei vielen Anwendungen wünschenswert ist. Anstelle von Aluminiumpulverteilchen können auch Metallteilchen aus Aluminium-Titan-Legierungen oder Aluminium-Magnesium-Legierungen verwendet werden.

Da Polyolefine wenig flammwidrig und für manche Anwendung nicht ausreichend wärmebeständig sind, andererseits die Zugabe von flammhemmenden Stoffen in wirksamer Konzentration den elektrischen Widerstand verringern würde, wird nach der Erfindung nach dem Synthetisieren ein oder mehrere bekannte Polymere zulegiert, die selbst nicht brennbar sowie wärmebeständiger sind. Dafür werden Polyphenylensulfid, Polyethylenterephtalat oder Polybutylenterephtalat verwendet.

Derartige Thermoplaste eignen sich besonders zum Einsatz auf allen Gebieten der Elektronik und Elektrotechnik wo Wärme abzuleiten ist. Dabei werden zwar die Wärmeleitungswerte von reinen Metallen nicht erreicht (zum Beispiel bei Aluminium-Kühlkörpern). Man kann jedoch auf zusätzliche Maßnahmen für elektrische Isolierung verzichten (zum Beispiel Kunststoffolien), die in der Regel große Wärmewiderstände darstellen und so die Wärmeabfuhr erheblich erschweren.

Weitere Ausgestaltungen ergeben sich aus den Unteransprüchen.

### Ausführungsbeispiele:

Die Ausführungsbeispiele 1-6 beziehen sich auf die erste Sythesestufe.

**1. Ausführungsbeispiel:** Polymerisation von Ethylen in Gegenwart von Aluminiumpulver.

174,2 g unbehandeltes Aluminiumpulver (Typ Ecka AS 081, Eckart-Werke; d = 5 - 45 µm) und

1,4 Liter wasserfreies Dieselöl der Firma Esso (Exsol D 140/170) werden unter Stickstoffatmosphäre in einen 2-Liter-Autoklaven aus rostfreiem Stahl gegeben. Die Suspension wird auf 80° C erhitzt, mit 0,651 g $TiCl_4$ versetzt und anschließend mit Ethylen gesättigt. Zusätzlich erfolgt die Zugabe von 14,7 g 1,7-Oktadien und 3,9 g eines trägerfixierten Ziegler-Katalysators, welcher auf bekannte Weise durch Mahlen von Mg $(OEt)_2$ und anschließender Umsetzung mit $TiCl_4$ und Al(i-Bu)$_3$ erhalten wurde (1. DE 1 795 197, Diedrich, Keil/Hoechst; 2. Polymer 19, Nr. 5 (1978), L. L. Böhm). Die Polymerisation erfolgt bei 80° C, einem Gesamtdruck von 1,6 bar und einer Rührerdrehzahl von 1100 U/min. Nach einer Polymerisationsdauer von 2 Stunden erhält man ein pulverförmiges Produkt, welches nach Waschen mit Aceton und Trocknen bei 60° C im Vakuum 206 g wiegt. Dies entspricht einem Aluminiumanteil von 65 Vol.-%.

Es wurden Proben mit verschiedenen Volumenanteilen Aluminiumpulver hergestellt, deren spezifischer elektrischer Durchgangswiderstand nach DIN 53482 stets oberhalb $3 \times 10^9$ Ohm.m lag und die damit als elektrische Isolatoren zu betrachten sind.

**2. Ausführungsbeispiel:** Polymerisation von Ethylen in Gegenwart von titanisiertem Aluminium. 202,6 g titanisiertes Al (Typ K 122, Omya GmbH) werden in einen 2-Liter-Stahlautoklaven gegeben. Die auf 80° C erhitzte Suspension wird mit 0.758 g $TiCl_4$ versetzt und mit Ethylen gesättigt. Es werden weiterhin 7.35 g 1,7-Okta dien und 3.3 g eines trägerfixierten ZieglerKatalysators dazugegeben. Die Polymerisation erfolgt wie beim Ausführungsbeispiel 1 angegeben. Die Auswaage beträgt nach der Trocknung 223 g, was einem Aluminiumanteil von 77 Vol-% entspricht.

**3. Ausführungsbeispiel:** Polymerisation von Ethylen in Gegenwart einer Al-Magnesium-Legierung.

131.8 g einer Al-Magnesium-Legierung (2.5 % Mg) werden als Pulver in einen 2-Liter-Stahlreaktor vorgelegt. Die auf 80° C erhitzte Suspension wird mit 0.494 g $TiCl_4$ versetzt und mit Ethylen gesättigt. Es wird wie im Ausführungsbeispiel 2 verfahren, jedoch mit 3.5 g des trägerfixierten Katalysators. Nach 4 Stunden und 35 Minuten wird die Polymerisation abgebrochen. Man erhält eine Auswaage von 197 g; der Metallgehalt im Produkt beträgt 41 Vol-%.

**4. Ausführungsbeispiel:** Polymerisation von Ethylen in Gegenwart von wasserfreiem Aluminium.

Zur Entfernung des adsorptiv an der Oberfläche des Aluminiumpulvers gebundenen Wassers wird das Pulver für eine Zeit von 4 Stunden im Vakuum auf eine Temperatur von 250° C erhitzt.

188,5 g des vorbehandelten Aluminiumpulvers (Eckart-Werke, Ecka AS 08) sowie 1,0 l Dieselöl (Esso AG, Exsol D 140/170) werden unter Stickstoffatmosphäre in einen 1,4 l Edelstahl-Rührautoklaven geben und suspendiert. Nach dem Aufheizen auf eine Temperatur von 80° C werden 0,093 g $TiCl_4$ zugegeben und der Reaktor mit 3,0 bar Ethylendruck beaufschlagt. Nach 30 min wird die Polymerisation durch Zugabe von 7,7 g Triisobutylaluminium gestartet. Die Reaktionstemperatur beträgt 80° C, die Suspension wird mit 1000 UpM gerührt. Nach einer Reaktionszeit von 183 min haben sich 28,5 g Polyethylen auf der Oberfläche des Aluminiumpulvers gebildet. Das Produkt enthält 69,4 Vol-% Aluminium.

**5. Ausführungsbeispiel:** Polymerisation von Ethylen in Gegenwart von vorbehandeltem Aluminiumpulver.

Es wird wie in Beispiel 4 gearbeitet, jedoch werden 175,0 g vorbehandeltes Aluminiumpulver (Trocknung 5 Stunden bei 250° C im Ölpumpenvakuum) eingesetzt. Die zugesetzte Menge $TiCl_4$ beträgt 0,086 g. Die Polymerisation wird durch die Zugabe von 7,16 g Tributylaluminium gestartet. Nach einer Reaktionszeit von 126 min hatten sich 17,5 g Polyethylen gebildet. Der Aluminiumanteil im Produkt beträgt somit 77,9 Vol-%.

**6. Ausführungsbeispiel:** Herstellung von peroxidisch vernetzten Al-Polyethylen.

Das vorbehandelte Aluminiumpulver 280 g Al (Eckart, AS081) wird unter Stickstoff in einen 2l-Stahlreaktor gefüllt. Danach füllt man 1,5 l eines über Molsieb getrocknetes Dieselöl (ESSO AG, Exsol D 140-170) unter Stickstoff in den Reaktor. Die Suspension wird unter Rühren auf die Reaktionstemperatur von 80° C erhitzt. Im Stickstoffgegenstrom werden 0,137 g $TiCl_4$ zugegeben. Nach 10 Minuten wird der Reaktor mit 3 bar Ethylen beaufschlagt. Sobald die Suspension mit Ethylen gesättigt ist, erfolgt die Zugabe von 11,46 g Triisobuthylaluminium. Während der Polymerisation beträgt die Rührerdrehzahl 1000 UpM (Blattrührer). Der Ethylendruck im Reaktor wird auf 3 bar konstant gehalten. Nach der Bildung von 30 g Polyethylen wird die Reaktion durch Unterbrechen der Ethylenzufuhr sowie Belüften des Reaktors abgebrochen.

Der Reaktorinhalt wird auf 25° C abgekühlt. Man suspendiert 1,8 g Interox DCLBP-50-P-SI (Peroxid-Chemie GmbH, Bis-(2, 4-dichlorbenzoyl)-peroxid, 50 % Paste in Siliconöl) in 100 ml Exsol (D 140-170) und gibt die Suspension in den mit Stickstoff begasten Reaktor. Die Temperatur der Reaktionsmasse wird auf 70° C eingestellt. Die Begasung mit Stickstoff wird während der ablaufenden Vernetzungsreaktion beibehalten. Die Rührerdrehzahl beträgt 1000 UpM. Nach einer Reaktionszeit von 210 Minuten wird der Reaktor abgekühlt und die Reste des Vernetzungsmittels mit Aceton aus dem Produkt gewaschen, filtriert und bei 80° C im Ölvakuum getrocknet.

**7. Ausführungsbeispiel:** Extrusion einer Mischung nach Ausführungsbeispiel 1 und Polyethylenterephtalat.

Mit einem in der deutschen Patentanmeldung P

35 14 854.3 vorgeschlagenen Doppelschnecken-Extruder wird eine Mischung aus 90 Gew.-% des Produktes nach Ausführungsbeispiel 1 und 10 Gew.-% Polyethylenterephtalat (PETP ultradur A 1550 der Fa. BASF) extrudiert. Der Anteil des PETP wurde kleiner 11 Gew.-% gewählt, um den Anteil des Aluminium größer 60 Vol-% zu halten. Spritzgußteile hergestellt aus diesem Compound besitzen bei einem spezifischen Durchgangwidersatand $\zeta > 10^{12}\Omega$ cm eine Wärmeleitfähigkeit $\lambda$ von größer 4 W/mk ( = Watt/Meter Kelvin). Sie können verwendet werden für Kühlkörper, Gehäuse und Umhüllungen för die Leistungselektronik.

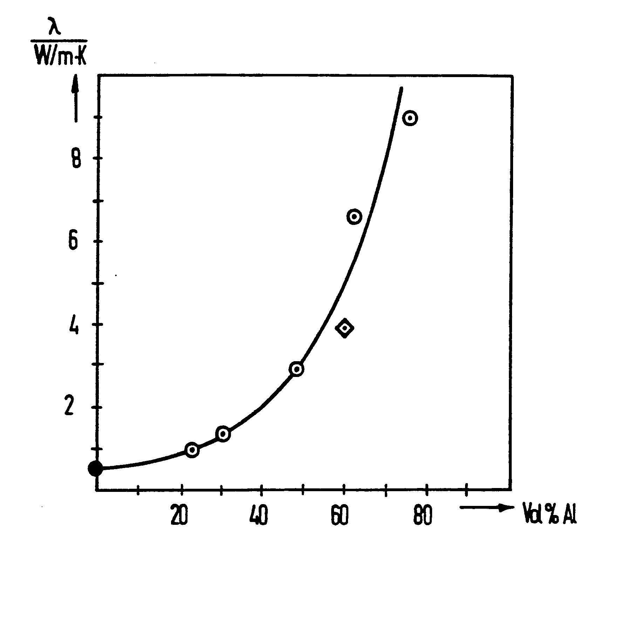

Die Abhängigkeit der Wärmeleitfähigkeit von mit verschiedenen Volumenteilen Aluminiumpulver hergestellten Proben vom Volumenanteil zeigt die in der Figur dargestellte Kurve. Dabei ist auf der Ordinate die Wärmeleitfähigkeit $\lambda$ pro W/mK und auf der Abszisse der Volumenanteil von Aluminium aufgetragen. Die Symbole FIG stellen Meßwerte von reinen Polyethylen/Al-Compound dar; das Symbol FIG ist ein Meßwert, der aus einer Legierung Polyethylen/Al mit Polyethylenterephtalat erhalten wurde (siehe Ausführungsbeispiel 7).

Wie aus der Figur zu entnehmen ist, ist zur Erzielung der gewünschten Wärmeleitfähigkeit von mindestens 2 Wm⁻¹K⁻¹ ein Volumenanteil von mindestens 40 % Aluminium notwendig. Der auf der Ordinate eingetragene Punkt stellt den Literaturwert (Polyethylen ohne Al) dar.

Die nach Vicat (DIN 53460) ermittelten Wärmeformbeständigkeiten der erfindungsgemäßen Thermoplaste liegen erheblich höher als bei reinem Polyethylen. Bei einem Volumenanteil von 75 % Aluminium wurde für die Vicat-Temperatur VST/B/50 zum Beispiel ein Wert von 147°C gemessen.

## Patentansprüche

1. Gut wärmeleitende, elektrisch isolierende Kunststoffe, insbesondere Thermoplaste, auf der Basis von mit vernetztem Polymer eingehüllten Metallteilchen, erhältlich durch Synthese von Polyolefinen in Gegenwart von aus Aluminium oder aus Aluminium enthaltenden Legierungen bestehenden Teilchen mittels eines an sich bekannten hochaktiven, heterogenen Ziegler-Katalysators und anschließendes Zulegieren weiterer Polymere aus der Gruppe Polyphenylensulfid, Polyethylenterephtalat oder Polybutylenterephtaeat.

2. Kunststoff nach Anspruch 1, dadurch gekennzeichnet, daß Aluminiumpulver verwendet wird.

3. Kunststoff nach Anspruch 2, dadurch gekennzeichnet, daß in bezug auf Wasserfreiheit vorhandeltes Aluminiumpulver verwendet wird.

4. Kunststoff nach mindestens einem der Ansprüche 1 bis 3, dadurch gekennzeichnet, daß eine Aluminium-Titan-Legierung verwendet wird.

5. Kunststoff nach mindestens einem der Ansprüche 1 bis 4, dadurch gekennzeichnet, daß eine Aluminium-Magnesium-Legierung verwendet wird.

6. Kunststoff nach mindestens einem der Ansprüche 1 bis 5, dadurch gekennzeichnet, daß eine oder mehrere Katalysator-Komponenten auf der Oberfläche der aus Aluminium oder Aluminium-Legierung bestehenden Teilchen fixiert werden und die Polymerisation mit oder ohne Zugabe eines zweiten Katalysatorsystems durchgeführt wird.

7. Kunststoff nach mindestens einem der Ansprüche 1 bis 6, dadurch gekennzeichnet, daß die Polymerisation in Gegenwart eines weiteren Olefins, insbesondere Diens, durchgeführt wird, um die Vernetzung der Polymerschicht auf der Metalloberfläche zu verbessern.

8. Kunststoff nach mindestens einem der Ansprüche 1 bis 6, dadurch gekennzeichnet, daß nach der Polymerisation die Vernetzung der Polymerschicht mittels Peroxid durchgeführt wird.

9. Verwendung von Kunststoffen nach einem der Ansprüche 1 bis 10 zur Wärmeableitung bei gleichzeitiger elektrischer Isolation von elektrischen und elektronischen Bauelementen, Baugruppen und Geräten.

## Claims

1. Highly thermally conductive, electrically insulating plastics compositions, in particular thermoplastics, based on metal particles coated with crosslinked polymer, which can be obtained by synthesising polyolefins in the presence of particles comprising aluminium or aluminium-containing alloys by means of a highly active, heterogeneous Ziegler catalyst, which is known per se, and subsequent additional incorporation of further polymers from the group comprising polyphenylene sulphide, polyethylene terephthalate or polybutylene terephthalate.

2. A plastics composition according to Claim 1, characterised in that aluminium powder is used.

3. A plastics composition according to Claim 2, characterised in that aluminium powder is used which has been pretreated with respect to freedom from water.

4. A plastics composition according to at least one of Claims 1 to 3, characterised in that an aluminium/titanium alloy is used.

5. A plastics composition according to at least one of Claims 1 to 4, characterised in that an aluminium/magnesium alloy is used.

6. A plastics composition according to at least one of Claims 1 to 5, characterised in that one or more catalyst components are supported on the surface of the particles comprising aluminium or the aluminium alloy and the polymerisation is carried out with or without addition of a second catalyst system.

7. A plastics composition according to at least one of Claims 1 to 6, <u>characterised in</u> that the polymerisation is carried out in the presence of a further olefin, in particular a diene, in order to improve the crosslinking of the polymer coating on the metal surface.

8. A plastics composition according to at least one of Claims 1 to 6, <u>characterised in</u> that the crosslinking of the polymer coating is carried out by means of peroxide after the polymerisation.

9. Use of the plastics compositions according to one of Claims 1 to 8 for dissipating heat and simultaneously electrically insulating electrical and electronic components, assemblies and equipment.

**Revendications**

1. Matière plastique, notamment matière thermoplastique, conduisant bien la chaleur et isolante du point de vue électrique, à base de particules métalliques enrobées de polymère réticulé pouvant être obtenu par synthèse de polyoléfines, en présence de particules en aluminium ou en alliages en contenant, au moyen d'un catalyseur Ziegler hétérogène très actif, connu en soi, et ensuite par addition d'autres polymères choisis dans le groupe du poly(sulfure de phénylène), du poly(téréphtalate d'éthylène) ou du poly(téréphtalate de butylène).

2. Matière plastique suivant la revendication 1, caractérisée en ce que de l'aluminium en poudre est utilisé.

3. Matière plastique suivant la revendication 2, caractérisée en ce qu'on utilise de l'aluminium en poudre prétraité jusqu'à ce qu'il soit exempt d'eau.

4. Matière plastique suivant l'une au moins des revendications 1 à 3, caractérisée en ce qu'un alliage d'aluminium et de titane est utilisé.

5. Matière plastique suivant l'une au moins des revendications 1 à 4, caractérisée en ce qu'un alliage d'aluminium et de magnésium est utilisé.

6. Matière plastique suivant l'une au moins des revendications 1 à 5, caractérisée en ce qu'un ou plusieurs constituants de catalyseur sont fixés à la surface des particules en aluminium ou en alliage d'aluminium, et la polymérisation est effectuée avec ou sans addition d'un second système de catalyseur.

7. Matière plastique suivant l'une au moins des revendications 1 à 6, caractérisée en ce que la polymérisation est effectuée en présence d'une autre oléfine, notamment d'un diène, pour améliorer la réticulation de la couche de polymère à la surface du métal.

8. Matière plastique suivant l'une au moins des revendications 1 à 6, caractérisée en ce qu'après la polymérisation, la réticulation de la couche de polymère est effectuée au moyen d'un peroxyde.

9. Utilisation de matières plastiques suivant l'une des revendications 1 à 10, pour dissiper de la chaleur, tout en isolant électriquement des composants électriques et électroniques, des ensembles et des appareils.